Europäisches Patentamt

European Patent Office

Office européen des brevets

(19)

(11)  **EP 0 871 849 B1**

(12)  **EUROPÄISCHE PATENTSCHRIFT**

(45) Veröffentlichungstag und Bekanntmachung des Hinweises auf die Patenterteilung:
**27.03.2002   Patentblatt 2002/13**

(51) Int Cl.⁷: **G01F 23/296**, G01S 15/10, G01S 7/52

(21) Anmeldenummer: **96946205.0**

(22) Anmeldetag: **17.12.1996**

(86) Internationale Anmeldenummer:
**PCT/DE96/02433**

(87) Internationale Veröffentlichungsnummer:
**WO 97/25596 (17.07.1997 Gazette 1997/31)**

(54) **VERFAHREN UND VORRICHTUNG ZUR BESTIMMUNG EINER FLÜSSIGKEITSHÖHE MIT HILFE VON ULTRASCHALLIMPULSEN**

PROCESS AND DEVICE FOR DETERMINING THE LEVEL OF A FLUID USING ULTRASONIC PULSES

PROCEDE ET DISPOSITIF POUR DETERMINER LE NIVEAU D'UN LIQUIDE A L'AIDE D'IMPULSIONS ULTRASONORES

(84) Benannte Vertragsstaaten:
**AT BE CH DE ES FR GB IT LI NL**

(30) Priorität: **03.01.1996  DE 19600097**

(43) Veröffentlichungstag der Anmeldung:
**21.10.1998   Patentblatt 1998/43**

(73) Patentinhaber: **SIEMENS AKTIENGESELLSCHAFT
80333 München (DE)**

(72) Erfinder:
• **WILLNER, Siegfried
D-96215 Lichtenfels (DE)**
• **EISENTRAUDT, Michael
D-96342 Stockheim (DE)**

(56) Entgegenhaltungen:
**EP-A- 0 106 677          EP-A- 0 138 541
WO-A-91/02950          DE-A- 4 126 063
US-A- 5 127 266**

**Beschreibung**

Die Erfindung betrifft ein Verfahren zur Bestimmung einer Flüssigkeitshöhe in einem Behälter aus einer Laufzeitmessung von Ultraschallimpulsen und einer mittleren Schallgeschwindigkeit.

Die Erfindung betrifft weiterhin eine Vorrichtung zur Durchführung des Verfahrens mit einer Rechnereinheit, die aus Referenzschallgeschwindigkeiten auf die mittlere Schallgeschwindigkeit extrapoliert, welche zur Berechnung der Flüssigkeitshöhe herangezogen wird.

Eine besonders exakte Bestimmung der Flüssigkeitshöhe ist z.B. bei einer unterirdischen Tankanlage für Treibstoff oder überhaupt bei einem Gefahrgutbehälter erforderlich. Hier muß aufgrund strenger Umweltauflagen praktisch jedwede Leckage erkannt und beseitigt werden. Bei einem großen Tank mit einer Querschnittsfläche von 1 bis 10 m$^2$ führt eine Fehlmessung der Flüssigkeitshöhe von nur 1 mm bereits zu einer Fehlbestimmung eines Flüssigkeitsvolumens von 1 bis 10 l.

Zur Überwachung eines Treibstofftanks ist ein berührungsloses Ultraschallmeßsystem bekannt, das mit Hilfe einer Laufzeitmessung von an einer Flüssigkeitsoberfläche reflektierten Ultraschallimpulsen nach dem Echolotprinzip die Flüssigkeitshöhe ermittelt. Ferner ist bekannt, dabei zum Messen der Laufzeit einen piezokeramischen Ultraschallwandler zu verwenden, der als einzelnes Bauteil sich sowohl zum Senden als auch zum Empfangen von Ultraschallimpulsen eignet.

Um aus der gemessenen Laufzeit die Füllstandshöhe zu errechnen, muß die Ausbreitungsgeschwindigkeit der Ultraschallimpulse in der Flüssigkeit bekannt sein. Gerade in einem großen Behälter wie einer Tankanlage ist jedoch die Dichte und die Temperatur in der Flüssigkeit nicht über das gesamte Behältervolumen konstant. Vielmehr bildet sich in vertikaler Richtung ein Dichte- und Temperaturgradient aus.

Da die Schallgeschwindigkeit dichte- und temperaturabhängig ist, muß für eine Bestimmung der Flüssigkeitshöhe mit einer Toleranz im mm-Bereich eine Korrektur der Schallgeschwindigkeit erfolgen. Auch ist für inhomogene Flüssigkeiten, deren Zusammensetzung schwankt, keine allgemeine Angabe der Schallgeschwindigkeit möglich.

Als Lösung ist aus dem US-Patent 4,748,846 bekannt, die Schallgeschwindigkeit mit Hilfe von Referenzstrecken bekannter Länge direkt in der Flüssigkeit zu messen. Zu diesem Zweck sind in vertikaler Richtung entlang der eigentlichen Meßstrecke, entlang derer ein Ultraschallwandler abstrahlt, zusätzlich Reflektoren für Ultraschall in vorgegebenen Abständen angeordnet. Zur Berechnung der Flüssigkeitshöhe wird eine mit Hilfe des sich jeweils der Flüssigkeitsoberfläche am nächsten befindlichen Reflektors ermittelte mittlere Schallgeschwindigkeit der Flüssigkeit herangezogen. Dies ist eine mittlere Schallgeschwindigkeit, da in vertikaler Richtung über die Höhe gemittelt wird.

Auch aus dem US-Patent 3,394,589 ist die Bestimmung einer Flüssigkeitshöhe in einem Behälter aus einer Laufzeitmessung von Ultraschallimpulsen und einer mittleren Schallgeschwindigkeit bekannt.

Die mit den Verfahren erreichbare Genauigkeit wird um so höher, je kleiner der Abstand der aufeinanderfolgenden Reflektoren ist.

Als Nachteil muß jedoch in einem komplizierten Signalnachweisverfahren unter Zuhilfenahme von elektronischen Ausblendzeiten zwischen Reflexionen von der Flüssigkeitsoberfläche und Reflexionen von festen Reflektoren unterschieden werden. Der erreichbaren Genauigkeit sind damit Grenzen gesetzt. Dies gilt selbst dann, wenn die Reflektoren separat neben der eigentlichen Meßstrecke angeordnet sind (US-Patent 5,095,748), da auch dann infolge von Mehrfachreflexionen die Reflektoren nicht beliebig dicht angeordnet sein können.

Der Erfindung liegt daher die Aufgabe zugrunde, ein Verfahren zur Bestimmung einer Flüssigkeitshöhe in einem Behälter aus einer Laufzeitmessung von Ultraschallimpulsen und einer mittleren Schallgeschwindigkeit zu schaffen, welches die genannten Nachteile vermeidet und insbesondere unabhängig von der Flüssigkeitshöhe eine Meßgenauigkeit von unter einem Millimeter erzielt. Es soll auch eine Vorrichtung zur Durchführung des Verfahrens mit besonders zweckdienlichen und einfachen Mitteln geschaffen werden.

Bezüglich des Verfahrens zur Bestimmung einer Flüssigkeitshöhe in einem Behälter aus einer Laufzeitmessung von Ultraschallimpulsen und einer mittleren Schallgeschwindigkeit, wird diese Aufgabe erfindungsgemäß gelöst, indem die mittlere Schallgeschwindigkeit aus mindestens zwei Referenzschallgeschwindigkeiten in der Flüssigkeit extrapoliert wird.

Die Erfindung geht dabei von der Erkenntnis aus, daß in der Flüssigkeit ein stetiger Verlauf der Temperatur und der Dichte, insbesondere in vertikaler Richtung, vorliegt. Infolgedessen ist in der Flüssigkeit auch ein stetiger Verlauf der Schallgeschwindigkeit in vertikaler Richtung zu erwarten. Die Schallgeschwindigkeit in der Flüssigkeit läßt sich damit als eine Funktion der Höhe über dem Behälterboden beschreiben. Durch Messung von mindestens zwei Referenzschallgeschwindigkeiten in unterschiedlicher Höhe des Behälters kann diese Funktion ermittelt und dadurch der Verlauf der Schallgeschwindigkeit über die Meßpunkte hinaus extrapoliert werden. Insbesondere wird dadurch eine sehr exakte Angabe der in vertikaler Richtung vom Behälterboden bis zur Flüssigkeitshöhe gemittelten mittleren Schallgeschwindigkeit möglich. Ebenso kann auch durch Messung von mindestens zwei Referenzschallgeschwindigkeiten über vertikal ausgerichtete Referenzstrecken unterschiedlicher Länge mit gleichem Fußpunkt der Verlauf der mittleren Schallgeschwindigkeit über die Höhe ermittelt und aus diesem Verlauf auf die bis zur Flüssigkeitshöhe gemittelte mittlere Schallgeschwindigkeit extrapoliert werden.

Die Bestimmung der Flüssigkeitshöhe geschieht in besonders vorteilhafter Weise rekursiv, indem aus einem Schätzwert für die Flüssigkeitshöhe eine genäherte mittlere Schallgeschwindigkeit ermittelt wird, die zur rekursiven Verbesserung des Schätzwertes für die Flüssigkeitshöhe herangezogen wird und wobei der verbesserte Schätzwert mit der Flüssigkeitshöhe gleichgesetzt wird. Durch dieses Verfahren nähert sich der Schätzwert für die Flüssigkeitshöhe asymptotisch dem tatsächlichen Wert an. Ist die gewünschte Genauigkeit für die Flüssigkeitshöhe erreicht, so kann das Verfahren abgebrochen werden. In der Regel wird der Schätzwert der Flüssigkeitshöhe in einem zweiten Durchgang bereits im Submillimeter-Bereich korrigiert, so daß nach Abbruch des Verfahrens nach dem ersten Durchgang eine Meßgenauigkeit der Flüssigkeitshöhe von 1 mm erreicht werden kann.

Besonders elegant und wenig rechenintensiv ist es, wenn die Extrapolation der mittleren Schallgeschwindigkeit eine lineare Approximation umfaßt. Da in der Regel in der Flüssigkeit der Verlauf der Schallgeschwindigkeit über die Höhe nicht linear ist, wird vorzugsweise eine geschickte Auswahl der Meßpunkte getroffen. Dabei genügen insbesondere zwei Meßpunkte für Referenzschallgeschindigkeiten, falls sich ein Meßpunkt in der Nähe des Behälterbodens und ein Meßpunkt in der Nähe der Flüssigkeitsoberfläche befindet. Die mittlere Schallgeschwindigkeit ergibt sich dabei mittels Integration des genäherten linearen Verlaufs der Schallgeschwindigkeit über die Höhe. Es ist aber auch möglich, mit Hilfe von vertikalen Referenzstrecken direkt den Verlauf der mittleren Schallgeschwindigkeit zu ermitteln. Geschickt ist es dabei, als Meßbereich die kürzeste und die längste noch eintauchende Referenzstrecke zu verwenden.

Infolge von Temperaturschwankungen kann es gerade in Flüssigkeitsbehältern mit langen Standzeiten zu einer Kondensation von Wasser kommen, welches sich als Sumpf am Behälterboden sammeln kann. Ebenso kann ein solcher Sumpf durch Absetzen bereits vorhandener Verunreinigungen in der Flüssigkeit entstehen. Vorzeitige Behälterreinigungen lassen sich vermeiden, wenn bei einer Verunreinigung, welche sich unterhalb einer Grenzfläche mit der Flüssigkeit in einem Sumpf sammelt, durch Reflexion von Ultraschallimpulsen an der Grenzfläche eine Sumpfhöhe in dem Behälter bestimmt wird. Durch die Bestimmung der Sumpfhöhe kann man zustandsorientiert solange warten, bis eine bestimmte Sumpfhöhe wirklich erreicht ist. Die Flüssigkeitshöhe ergibt sich durch Abzug der Sumpfhöhe.

Vorteilhafterweise wird für eine Zapfanlage, bei der die Abgabemenge volumetrisch erfaßt wird, ein Flüssigkeitsvolumen aus der Flüssigkeitshöhe bestimmt. Für die Umrechnung der Flüssigkeitshöhe in das Flüssigkeitsvolumen wird entweder die exakte Geometrie des Behälters benutzt oder es wird z.B. mit einem geeichten Durchflußzähler ein diesbezüglicher Zusammenhang durch stufenweises Befüllen oder Leeren des Behälters ("Einlitern") erstellt.

Da das Flüssigkeitsvolumen temperaturabhängig ist, ist es zur Vermeidung einer Fehlabgabe von Vorteil, wenn das Flüssigkeitsvolumen mit Hilfe einer mittleren Temperatur temperaturnormiert wird, wobei die mittlere Temperatur über eine Integration eines in der Flüssigkeit gemessenen vertikalen Temperaturverlaufs ermittelt wird.

Bezüglich der Vorrichtung wird die Aufgabe erfindungsgemäß dadurch gelöst, daß zur Bestimmung einer Flüssigkeitshöhe in einem Behälter aus einer Laufzeitmessung von Ultraschallimpulsen entlang einer zwischen einem ersten und einem zweiten Ende gelegenen Hauptmeßstrecke mindestens eine Vorrichtung zum Senden und Empfangen von Ultraschallimpulsen, mindestens zwei Referenzstrecken zur Bestimmung von Schallgeschwindigkeiten und eine Rechnereinheit vorgesehen sind, wobei die Rechnereinheit aus den Schallgeschwindigkeiten auf eine mittlere Schallgeschwindigkeit extrapoliert, welche zur Berechnung der Flüssigkeitshöhe herangezogen wird.

Zur Messung wird die Vorrichtung derart ausgerichtet, daß die Hauptmeßstrecke vertikal in einer Flüssigkeit ausgerichtet ist. Dabei befindet sich das erste Ende der Vorrichtung in einem festem Abstand zu einem Behälterboden.

Vorteilhafterweise sind in einer Reihe parallel neben der Hauptmeßstrecke zwischen dem ersten und dem zweiten Ende Reflektoren für Ultraschall mit vorgegebenen Abständen zueinander angeordnet. Mit Hilfe dieser Reflektoren läßt sich, wie bereits beschrieben, direkt der Verlauf der mittleren Schallgeschwindigkeit über die Höhe vom Behälterboden ermitteln. Durch die parallel versetzte Anordnung kann zudem leicht zwischen an einer Flüssigkeitsoberfläche reflektierten und an einem Reflektor reflektierten Ultraschallimpulsen unterschieden werden. Um auch eine Unterscheidung verschiedener Reflektoren zu ermöglichen, sollten die Abstände der Reflektoren nicht ganzzahlige Vielfache voneinander sein. Zusätzlich wird eine schlanke Bauweise der Vorrichtung möglich, so daß diese auch nachträglich in einem geschlossenen Behälter mit schmalem Einfüllstutzen oder schmaler Entlüftungsöffnung eingebracht werden kann.

Zur Bestimmung einer mittleren Temperatur in der Flüssigkeit, die für eine Temperaturnormierung eines Flüssigkeitsvolumens erforderlich wird, sind vorzugsweise mehrere Temperatursensoren zwischen dem ersten und dem zweiten Ende in Reihe mit vorgegebenen Abständen zueinander angeordnet.

Besonders vorteilhaft ist es, wenn ein erstes Führungsrohr die Hauptmeßstrecke, ein zweites Führungsrohr die Referenzstrecken und ein drittes Führungsrohr die Temperatursensoren umgibt, wobei jedes Führungsrohr Öffnungen aufweist, über die beim Betrieb das Innere des jeweiligen Führungsrohrs mit der umgebenden Flüssigkeit kommuniziert. Durch das Verlegen der Meßstrecken in Führungsrohre wird erreicht, daß sich die abgestrahlten Ultraschallimpulse jeweils gerichtet ausbreiten. Auf diese Weise erhöht sich die Intensität reflektierter Impulse, so daß auch längere Strecken noch vermessen werden können, die bei freier Ausbreitung nicht mehr erfaßt werden könnten.

Zusätzlich wird durch Führungsrohre eine hohe Stabilität der Vorrichtung bei gleichzeitig schlanker Bauweise erzielt. Werden die drei Führungsrohre miteinander verbunden, so kann der zwischen den Rohren entstehende Hohlraum zum sicheren Verlegen von Verbindungskabeln genutzt werden.

Besonders einfach geschieht die Vermessung von Laufzeiten dadurch, daß die Vorrichtung zum Senden und Empfangen von U1traschallimpulsen als ein Ultraschallwandler ausgebildet ist, welcher sich, wie bereits erwähnt, als einzelnes Bauteil sowohl zum Senden als auch zum Empfangen von Ultraschallimpulsen eignet.

Vorteilhafterweise ist am ersten Ende jedes Führungsrohrs ein jeweiliger separater Ultraschallwandler angeordnet, wobei die Ultraschallwandler im ersten und zweiten Führungsrohr zum Abstrahlen in Richtung des zweiten Endes und der Ultraschallwandler im dritten Führungsrohr zum Abstrahlen in Richtung des ersten Endes angeordnet sind. Im Betrieb der Vorrichtung befindet sich das erste Ende in definiertem Abstand zum Behälterboden in der Flüssigkeit. Der im ersten Führungsrohr angeordnete Ultraschallwandler dient im Betrieb der Vorrichtung zur Laufzeitmessung von an der Flüssigkeitsoberfläche reflektierten Ultraschallimpulsen. Mit Hilfe des zweiten Ultraschallwandlers können Referenzschallgeschwindigkeiten ermittelt werden. Dadurch daß der im dritten Führungsrohr angeordnete Ultraschallwandler entgegengesetzt abstrahlt, kann durch Reflexion sowohl eine Sumpfhöhe als auch der Abstand zum Behälterboden festgestellt werden, falls sich noch kein Sumpf angesammelt hat.

Da Ultraschallwandler beim Anlegen eines Spannungsimpulses keinen Einzelimpuls, sondern eine Folge von Ultraschallimpulsen mit abklingender Intensität abstrahlen, entsteht zwischen dem Aussenden und dem Empfangen eine physikalische Totzeit. Umgerechnet auf eine Streckenlänge entspricht diese Totzeit in der Regel etwa 10 cm. Um mit Hilfe des Ultraschallwandlers im dritten Führungsrohr auch Sumpfhöhen unterhalb 10 cm zu messen, ist der Ultraschallwandler im dritten Führungsrohr gegenüber dem Ultraschallwandler im ersten Führungsrohr zum zweiten Ende der Vorrichtung hin versetzt angeordnet. Übersteigt die Sumpfhöhe den Ultraschallwandler im ersten Führungsrohr, so kann die Sumpfhöhe wahlweise auch mit Hilfe dieses Ultraschallwandler detektiert werden.

Da Ultraschallimpulse in der Flüssigkeit gedämpft werden, kann ein Reflexionssignal in der Regel maximal bis zu einer Entfernung von 2 m zwischen einer Reflexionsschicht und dem Sender bzw. Empfänger detektiert werden. Um auch darüber hinausgehende Flüssigkeitshöhen vermessen zu können, ist am zweiten Ende im Führungsrohr der Referenzstrecken ein zusätzlicher Ultraschallwandler zum Abstrahlen in Richtung vom ersten zum zweiten Ende angeordnet. Übersteigt die Flüssigkeit diesen Ultraschallwandler, so kann dieser an Stelle des Ultraschallwandlers am ersten Ende zur Bestimmung der Flüssigkeitshöhe herangezogen werden.

Besonders vorteilhaft für die Extrapolation der mittleren Schallgeschwindigkeit ist es, wenn sich in Richtung vom ersten zum zweiten Ende hinter dem zusätzlichen Ultraschallwandler mindestens ein Reflektor befindet.

Für die mechanische Stabilität und zur vertikalen Ausrichtung der Vorrichtung ist es vorteilhaft, wenn eines der Führungsrohre als ein hohler Tragarm ausgebildet ist, welcher beim Betrieb aus dem Behälter herausragt und ein Kugelgelenk zum Befestigen und zur vertikalen Ausrichtung der Vorrichtung beinhaltet. Der beim Betrieb aus dem Behälter herausragende hohle Tragarm kann zum Einbau einer Elektronik verwendet werden, welche die Ultraschallwandler bzw. die Temperatursensoren ansteuert und auswertet.

Ein Ausführungsbeispiel der Erfindung wird anhand einer Zeichnung näher erläutert. Darin zeigen:

FIG 1   eine Meßvorrichtung zur Bestimmung einer Flüssigkeitshöhe in einem Behälter, vorzugsweise für Treibstoffbehälter, nach dem beanspruchten Verfahren;

FIG 2   schematisch eine Anordnung der Meßvorrichtung in dem Behälter beim Betrieb mit Angabe der verwendeten Meßgrößen;

FIG 3   in einem ersten Diagramm eine mittlere Schallgeschwindigkeit $\bar{v}$ in einer Flüssigkeit als Funktion einer Höhe und

FIG 4   in einem zweiten Diagramm einen Temperaturverlauf in der Flüssigkeit als Funktion einer Höhe.

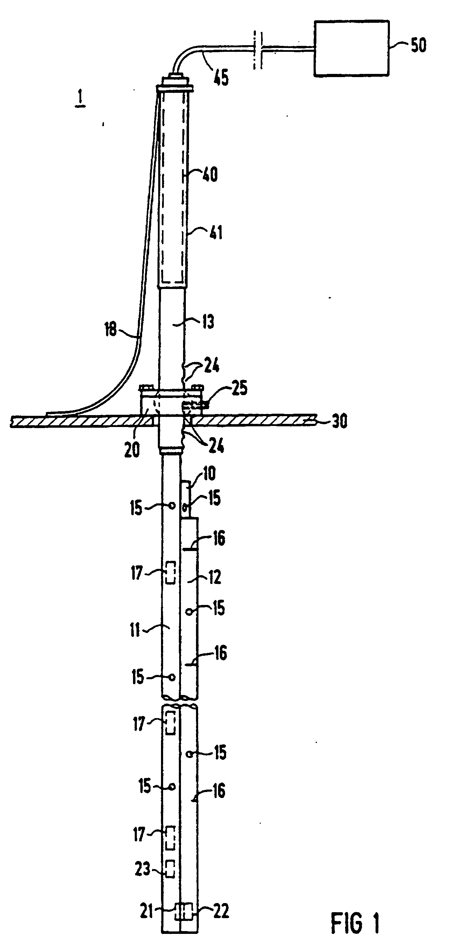

Die in Figur 1 dargestellte Meßvorrichtung 1 umfaßt ein Meßrohr 10, ein Hauptrohr 11, sowie ein Referenzrohr 12. Am oberen Ende des Hauptrohrs 11 befindet sich ein Kugelgelenk 20, welches beim Befestigen der Meßvorrichtung 1 an einem Behälter gleichzeitig zur vertikalen Ausrichtung dient. Von dem Behälter ist zur Vereinfachung lediglich eine Behälterabdeckung 30 eingezeichnet. Das Kugelgelenk 20 ist mit Hilfe von Aussparungen 24 und einem Gewindestift 25 entlang des hohlen Tragarms 13 axial verschiebbar.

Oberhalb der Behälterabdeckung 30 ist das Hauptrohr 10 als hohler Tragarm 13 zur Aufnahme einer Sondenelekcronik 40 ausgebildet. Zum leichten Austausch der Sondenelektronik 40 ist eine verschiebbare Hülse 41 über dem hohlen Tragarm 13 montiert. Zur Verbindung der Sondenelektronik 40 mit einer Rechnereinheit 50 ist eine Steuerleitung 45 vorgesehen. Die Rechnereinheit 50 ist separat außerhalb der Meßvorrichtung 1 angebracht. Zum Potentialausgleich verfügt die Meßvorrichtung 1 über einen blitzschutz durch einen Überspannungsableiter 18. Somit ist eine Installation auch an einem Tank möglich, der nicht auf Erdpotential liegt. (z.B. an einem Tank mit einer Kathodenschutzeinrichtung).

Jedes der drei als Schallführungsrohre ausgebildeten Rohre 10, 11, 12 weist Öffnungen 15 auf, durch welche das Innere der Schallführungsrohre 10, 11, 12 beim Betrieb mit einer umgebenden Flüssigkeit kommuniziert. In das Innere des Meßrohres 10 sowie des Referenzrohres 12 ist jeweils am unteren Ende ein Ultraschallwandler 21 bzw. 22 mit einer nach oben gerichteten Abstrahlfläche eingepaßt. In das Innere des Hauptrohres 11 ist am unteren Ende ein weiterer Ultraschallwandler 23 eingepaßt, dessen Abstrahlfläche nach unten zeigt. Der Ultraschallwandler 23 ist dabei gegenüber den beiden Ultraschallwandlern 21, 22, die sich auf gleicher Höhe befinden, nach oben um 10 cm versetzt.

Im Inneren des Referenzrohres 12 sind mit Abständen von 30 cm, 75 cm und 130 cm zum Ultraschallwandler 22 drei Reflektoren 16 für Ultraschall befestigt. Mit zunehmendem Abstand vom Ultraschallwandler 22 wächst die horizontale Ausdehnung der Reflektoren 16, die in Form von flachen Metallplättchen ausgebildet sind.

Des Weiteren sind im Inneren des Hauptrohres 11 mit gleichen Abständen zueinander drei Temperatursensoren 17 angeordnet. Die in den hohlen Tragarm 13 integrierte Sondenelektronik 40 steuert die Ultraschallwandler 21,22 und 23 sowie die Temperatursensoren 17 an und liest diese aus. Die dabei ermittelten Daten werden in Form von elektrischen Spannungssignalen über die Steuerleitung 45 an die Rechnereinheit 50 weitergegeben.

Der Gesamtdurchmesser der miteinander verbundenen Schallführungsrohre 10, 11, 12 ist im Ausführungsbeispiel kleiner als zwei Zoll. Zusätzlich besitzt das Kugelgelenk 20 am unteren Ende ein Zwei-Zoll-Gewinde nach DIN ISO 228/1/G2. Dadurch ist die Meßvorrichtung 1 adaptiert auf die genormten Bauformen von Treibstofftanks an Tankstellen. Die Vorrichtung kann problemlos nachträglich durch eine genormte Zwei-Zoll-Öffnung eines Domdeckels in den Treibstofftank eingeführt und mit diesem verschraubt werden.

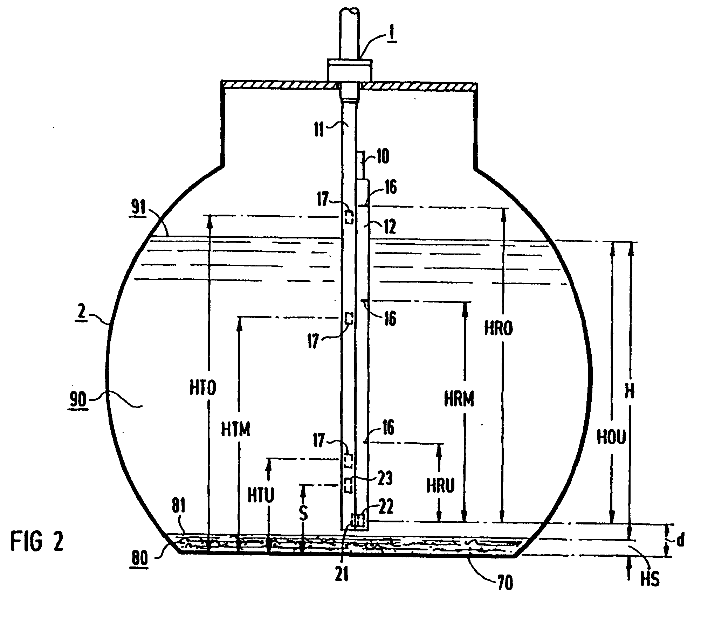

Figur 2 zeigt die Meßvorrichtung 1 beim Meßbetrieb vertikal ausgerichtet in einem Behälter 2. Am Behälterboden 70 hat sich ein Sumpf 80 mit einer Sumpfhche HS bis zu einer Grenzfläche 81 zu einer Flüssigkeit 90 gebildet. Die Flüssigkeit 90 erstreckt sich in dem Behälter 2 mit einer Flüssigkeitshöhe H bis zu einer Flüssigkeitsoberfläche 91. Die Ultraschallwandler 21 und 22 befinden sich in einem Abstand d vom Behälterboden 70.

Die Reflektoren 16 befinden sich in den Abständen HRO, HRM und HRU über dem Ultraschallwandler 22 innerhalb des Referenzrohrs 12. Die Temperatursensoren 17 sind in den Abständen HTO, HTM und HTU über dem Behälterboden 70 entlang des Hauptrohrs 10 befestigt. Alle genannten Abstände werden beim Neueinbau der Meßvorrichtung selbständig erfaßt bzw. errechnet. Dazu wird mit Hilfe des Ultraschallwandlers 23 dessen Abstand s zum Behälterboden 70 und damit auch der Abstand d der Ultraschallwandler 22 und 23 zum Behälterboden 70 ermittelt.

Beim Meßbetrieb nach Figur 2 strahlt der Ultraschallwandler 21 mit einer Taktfrequenz von 83Hz Ultraschallimpulse entlang des Meßrohrs 10 ab und detektiert an einer Flüssigkeitsoberfläche reflektierte Ultraschallimpulse entsprechend einer Laufzeit tH.

Der Ultraschallwandler 22 wird analog mit einer Taktfrequenz von 83Hz angesteuert und strahlt entlang des Referenzrohrs 12 ab. Mit Hilfe von elektronischen Meßfenstern, die eine Detektion zurücklaufender Ultraschallimpulse entsprechend einer seit dem Aussendezeitpunkt verstrichenen Zeit erlauben, werden die den einzelnen Reflektoren 16 entsprechenden Laufzeiten bestimmt. Mit der gleichen Methode wird auch erkannt, welcher Reflektor 16 sich bei einem sinkendem Flüssigkeitsstand noch in der Flüssigkeit befindet, da zwischen den zu erwartenden Detektionszeitpunkten von zwei benachbarten Reflektoren 16 durch Reflexion an der Flüssigkeitsoberfläche 91 ein zusätzliches Echosignal entsteht.

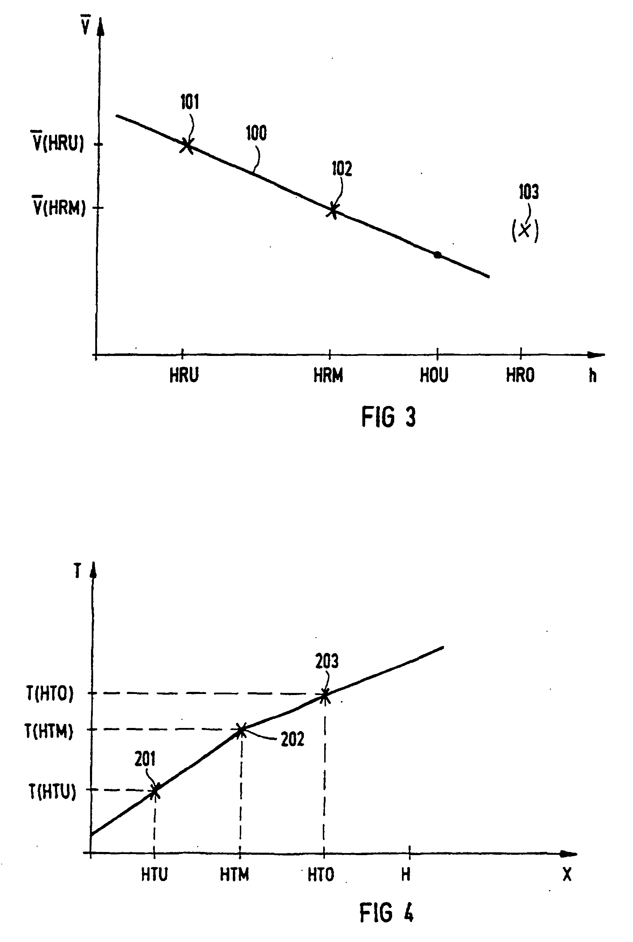

Der Verlauf einer mittleren Schallgeschwindigkeit $\bar{v}(h)$, wobei h die Höhe über dem Ultraschallwandler 22 bezeichnet, wird mit Hilfe einer linearen Regressionsgeraden 100 nach Figur 3 anhand von zwei der drei möglichen Meßpunkte 101, 102 und 103 bestimmt. Entsprechend Figur 2 wird dazu der Reflektor mit Abstand HRU und abhängig von der Flüssigkeitshöhe H der letzte noch eintauchende Reflektor, d.h. im gezeichneten Fall der Reflektor im Abstand HRM benutzt. Es resultiert folgende Formel:

$$\bar{v}(h) = \bar{v}(HRU) + \frac{(h-HRU)}{(HRM-HRU)} \cdot (\bar{v}(HRM) - \bar{v}(HRU))$$

Mit Hilfe des Ultraschallwandlers 23 wird durch Reflexion an der Grenzfläche 81 die Sumpfhöhe HS ermittelt.

Der Abstand HOU der Flüssigkeitsoberfläche 91 zum Ultraschallwandler 21 wird rekursiv mit Hilfe der mittleren Schallgeschwindigkeit $\bar{v}(h)$ gemäß folgender Formeln bestimmt:

$$HOU_{(1)} = HRM$$

$$HOU_{(i)} = \bar{v}(HOU_{(i-1)}) \cdot tH$$

$$HOU = HOU_{(i)}.$$

Zunächst wird der Abstand des letzten nach eintauchenden Reflektors zu dem Ultraschallwandler 22, d.h. im gezeichneten Beispiel gemäß Figur 2 der Abstand HRM, als ein Schätzwert $HOU_{(1)}$ für den Abstand HOU herangezogen. Dieser Schätzwert wird mit Hilfe der Beziehung $\bar{v}(h)$ und der ermittelten Laufzeit tH von an der Flüssigkeitsoberfläche 91 reflektierten Ultraschallimpulsen schrittweise verbessert. Der verbesserte Schätzwert $HOU_{(i)}$ wird mit dem Abstand HOU gleichgesetzt.

Im Ausführungsbeispiel der Erfindung wird nach der ersten Verbesserung (d.h. i = 2) des obigen Iterationsverfahrens abgebrochen, da bereits hier eine Genauigkeit von unter 1 mm erreicht wird. Die Flüssigkeitshöhe H in dem Behälter ergibt sich aus den errechneten Werten gemäß der Formel:

$$H = HOU + d - HS.$$

Aus der Flüssigkeitshöhe H wird auf ein Flüssigkeitsvolumen umgerechnet. Dazu kann wahlweise die exakt vorgegebene Geometrie des Behälters in die Rechnereinheit eingegeben werden, oder es wird mit einem geeichten Durchflußzähler eine Behälterkennlinie durch stufenweises Entleeren bzw. Befüllen des Behälters erstellt.

In Figur 4 sind die mit Hilfe der Temperatursensoren 17 ermittelten Meßpunkte 201, 202 und 203 eingetragen, wobei x den Abstand zum Behälterboden 70 bezeichnet. Der Temperaturverlauf zwischen den Meßpunkten wird mit Hilfe einer linearen Interpolation errechnet.

Zur Ermittlung einer mittleren Temperatur TM wird sich des Integralsatzes anhand folgender Formeln bedient:

a) Drei eintauchende Temperatursensoren:

$$TM \cdot H = \int_0^{HTM} \left[ T(HTU) + \frac{(x - HTU)}{(HTM - HTU)} \cdot (T(HTM) - T(HTU)) \right] dx$$

$$+ \int_{HTM}^{H} \left[ T(HTM) + \frac{(x - HTU)}{(HTO - HTM)} (T(HTO) - T(HTM)) \right] dx$$

$$TM = \frac{1}{H} \left[ \frac{HTM^2}{2(HTM - HTU)} \cdot T(HTM) + \left( H - HTM + \frac{HTM^2}{2(HTM - HTU)} \right. \right.$$

$$\left. \left. - \frac{HTM - HTU}{(HTM - HTU)} - \frac{(H - HTM)^2}{2(HTO - HTM)} \right) T(HTM) + \frac{(H - HTM)^2}{2(HTO - HTM)} \cdot T(HTO) \right]$$

b) Zwei eintauchende Temperatursensoren:

$$TM \cdot H \approx \int_0^H \left[ T(HTU) + \frac{(x - HTU)}{(HTM - HTU)} \cdot (T(HTM) - T(HTU)) \right] dx$$

$$TM = \frac{(2HTM-H)}{2(HTM-HTU)} \cdot T(HTU) + \frac{(H-2HTU)}{2(HTM-HTU)} \cdot T(HTM)$$

c) Ein eintauchender Temperatursensor:

$$TM = T(HTU)$$

Mit Hilfe einer temperaturabhängigen Dichte der Flüssigkeit 90 wird ein auf 15 °C normiertes Füllvolumen berechnet.

**Patentansprüche**

1. Verfahren zur Bestimmung einer Flüssigkeitshöhe (H) in einem Behälter (2) aus einer Laufzeitmessung von Ultraschallimpulsen und einer mittleren Schallgeschwindigkeit ($\bar{v}$(H)),
   **dadurch gekennzeichnet, daß** für mindestens zwei sich in der Flüssigkeit (90) befindende Referenzstrecken jeweils die Referenzschallgeschwindigkeit gemessen, daß aus den mindestens zwei Referenzschallgeschwindigkeiten mittels einer Extrapolation der Verlauf (($\bar{v}$(h)) der mittleren Schallgeschwindigkeit ($\bar{v}$) in vertikaler Richtung über die Hohe (h) ermittelt wird, daß aus diesem Verlauf ($\bar{v}$(h)) über die tatsachlichen Meßpunkte hinaus auf die bis zur Flussigkeitshöhe (H) gemittelte mittlere Schallgeschwindigkeit ($\bar{v}$(H)) geschlossen und daraus mittels einer Laufzeit (tH) der an der Flüssigkeitsoberflache (91) reflektierten Ultraschallimpulse die Flüssigkeitshohe (H) bestimmt wird.

2. Verfahren nach Anspruch 1,
   **dadurch gekennzeichnet, daß** die Bestimmung der Flüssigkeitshohe (H) rekursiv erfolgt, indem fur einen Schatzwert fur die Flussigkeitshöhe (H) aus dem Verlauf ($\bar{v}$(h)) der mittleren Schallgeschwindigkeit ($\bar{v}$) über die Hohe (h) eine genäherte mittlere Schallgeschwindigkeit ermittelt wird, daraus durch Multiplikation mit der Laufzeit (tH) ein verbesserter Schätzwert für die Flüssigkeitshohe (H) bestimmt, der verbesserte Schätzwert mit dem Schätzwert der Flussigkeitshöhe (H) gleichgesetzt und daraus erneut ein verbesserter Schätzwert bestimmt wird.

3. Verfahren nach Anspruch 1 oder 2,
   **dadurch gekennzeichnet, daß** die Extrapolation der mittleren Schallgeschwindigkeit eine lineare Approximation umfaßt.

4. Verfahren nach einem der Anspruche 1 bis 3,
   **dadurch gekennzeichnet, daß** bei einer Verunreinigung, welche sich unterhalb einer Grenzfläche (81) mit der Flüssigkeit (90) in einem Sumpf (80) sammelt, durch Reflexion von Ultraschallimpulsen an der Grenzfläche (81) eine Sumpfhöhe (HS) in dem Behälter (2) bestimmt wird.

5. Verfahren nach einem der Anspruche 1 bis 4,
   **dadurch gekennzeichnet, daß** ein Flüssigkeitsvolumen aus der Flüssigkeitshohe bestimmt wird.

6. Verfahren nach Anspruch 5,
   **dadurch gekennzeichnet, daß** mit Hilfe einer mittleren Temperatur (TM) das Flussigkeitsvolumen temperaturnormiert wird, wobei die mittlere Temperatur (TM) über eine Integration eines in der Flüssigkeit gemessenen vertikalen Temperaturverlaufs ermittelt wird.

7. Vorrichtung zur Bestimmung einer Flussigkeitshöhe (H) in einem Behalter (2) aus einer Laufzeitmessung von Ultraschallimpulsen entlang einer zwischen einem ersten und einem zweiten Ende gelegenen Hauptmeßstrecke mit mindestens einer vorrichtung zum Senden und Empfangen von Ultraschallimpulsen, mindestens zwei sich beim Betrieb in der Flüssigkeit (90) befindende Referenzstrecken zur Bestimmung der jeweiligen Referenzschallgeschwindigkeiten und einer Rechnereinheit (50), wobei die Rechnereinheit (50) aus den mindestens zwei Referenzschallgeschwindigkeiten mittels einer Extrapolation den Verlauf (($\bar{v}$ (h)) der mittleren Schallgeschwindigkeit ($\bar{v}$) in vertikaler Richtung uber die Hohe (h) ermittelt, aus diesem Verlauf ($\bar{v}$(h)) über die tatsachlichen Meßpunkte hinaus auf die bis zur Flussigkeitshohe (H) gemittelte mittlere Schallgeschwindigkeit ($\bar{v}$(H)) schließt und daraus mittels einer Laufzeit (tH) der an der Flussigkeitsoberfläche (91) reflektierten Ultraschallimpulse die Flüssigkeitshöhe (H) bestimmt.

8. Vorrichtung nach Anspruch 7,
   **dadurch gekennzeichnet, daß** in einer Reihe parallel neben der Hauptmeßstrecke zwischen dem ersten und dem zweiten Ende Reflektoren (16) für Ultraschall mit vorgegebenen Abstanden zueinander angeordnet sind.

9. Vorrichtung nach Anspruch 7 oder 8,
   **dadurch gekennzeichnet, daß** mehrere Temperatursensoren (17) zwischen dem ersten und dem zweiten Ende mit vorgegebenen Abständen zueinander angeordnet sind.

10. Vorrichtung nach Anspruch 9,
    **dadurch gekennzeichnet, daß** ein erstes Fuhrungsrohr (10) die Hauptmeßstrecke, ein zweites Fuhrungsrohr (12) die Referenzstrecken und ein drittes Fuhrungsrohr (11) die Temperatursensoren (17) umgibt, wobei jedes Führungsrohr Offnungen (15) aufweist, über die beim Betrieb das Innere des jeweiligen Fuhrungsrohrs mit der umgebenden Flussigkeit (90) kommuniziert.

11. Vorrichtung nach einem der Ansprüche 7 bis 10,
    **dadurch gekennzeichnet, daß** die Vorrichtung zum Senden und Empfangen von Ultraschallimpulsen als ein Ultraschallwandler ausgebildet ist.

12. Vorrichtung nach Anspruch 11,
    **dadurch gekennzeichnet, daß** am ersten Ende jedes Fuhrungsrohrs (10, 11, 12) ein jeweiliger separater Ultraschallwandler angeordnet ist, wobei die Ultraschallwandler (21, 22) im ersten und zweiten Führungsrohr (10, 12) zum Abstrahlen in Richtung des zweiten Endes und der Ultraschallwandler (23) im dritten Fuhrungsrohr (11) zum Abstrahlen in Richtung des ersten Endes angeordnet sind.

13. Verrichtung nach Anspruch 12,
    **dadurch gekennzeichnet, daß** der Ultraschallwandler (23) im dritten Fuhrungsrohr (11) gegenüber dem Ultraschallwandler (21) im ersten Führungsrohr (10) zum zweiten Ende hin versetzt angeordnet ist.

14. Vorrichtung nach Anspruch 12,
    **dadurch gekennzeichnet, daß** am zweiten Ende im Fuhrungsrohr (12) der Referenzstrecken ein zusätzlicher Ultraschallwandler zum Abstrahlen in Richtung vom ersten zum zweiten Ende angeordnet ist.

15. Vorrichtung nach Anspruch 14,
    **dadurch gekennzeichnet, daß** sich in Richtung vom ersten zum zweiten Ende hinter dem Ultraschallwandler am zweiten Ende im Fuhrungsrohr (12) der Referenzstrecken mindestens ein Reflektor (16) befindet.

16. Vorrichtung nach einem der Anspruche 12 bis 15,
    **dadurch gekennzeichnet, daß** eines der Fuhrungsrohre als ein hohler Tragarm ausgebildet ist, welcher beim Betrieb aus dem Behalter herausragt und ein Kugelgelenk zum Befestigen und zur vertikalen Ausrichtung der Vorrichtung beinhaltet.

## Claims

1. Method for determining a liquid level (H) in a container (2) from an echo-time measurement of ultrasonic impulses and a mean sound velocity ($\bar{v}$(H)), **characterized in that** the reference sound velocity is measured in each case for at least two reference paths situated in the liquid (90), **in that** the variation ($\bar{v}$(h)) of the mean sound velocity ($\bar{v}$(h)) is determined over height (h) in the vertical direction from the at least two reference sound velocity by means of an extrapolation, and **in that** the mean sound velocity averaged up to the liquid level (H) is inferred beyond the actual measurement points from said variation ($\bar{v}$(h)) and the liquid level (H) is determined therefrom by means of an echo time (tH) of the ultrasonic pulses reflected at the liquid surface (91).

2. Method according to Claim 1, **characterized in that** the liquid level (H) is determined recursively by determining an approximated mean sound velocity for an estimated value for the liquid level (H) from the variation ($\bar{v}$(h)) in the mean sound velocity ($\bar{v}$) over the height (h), an improved estimated value for the liquid level (H) is determined therefrom through multiplication by the echo time (tH), the improved estimated value is equated to the estimated value of the liquid level (H) and an improved estimated value is again determined therefrom.

3. Method according to Claim 1 or 2, **characterized in that** the extrapolation of the mean sound velocity comprises a linear approximation.

4. Method according to one of Claims 1 to 3, **characterized in that**, in the case of a pollutant that collects in a sump (80) below an interface (81) with the liquid (90), a sump level (HS) is determined in the container (2) by reflection of ultrasonic pulses at the interface (81).

5. Method according to one of Claims 1 to 4, **characterized in that** a liquid volume is determined from the liquid level.

6. Method according to Claim 5, **characterized in that** the liquid volume is normalized with respect to temperature with the aid of a mean temperature (TM), wherein the mean temperature (TM) is determined by means of an integration of a vertical temperature variation measured in the liquid.

7. Device for determining a liquid level (H) in a container (2) from an echo-time measurement of ultrasonic pulses along a main measuring path situated between a first and a second end having at least one device for transmitting and receiving ultrasonic pulses, at least two reference paths, situated in the liquid (90) during operation, for determining the respective reference sound velocities and a computer unit (50), wherein the computer unit (50) determines the variation ($\bar{v}$(h)) in the mean sound velocity ($\bar{v}$) over height (h) in the vertical direction from the at least two reference sound velocities by means of an extrapolation, infers the mean sound velocity ($\bar{v}$(H)) averaged up to the liquid level (H) beyond the actual measurement points from said variation ($\bar{v}$(h)) and determines the liquid level (H) therefrom by means of an echo time (tH) of the ultrasonic pulses reflected at the liquid surface (91).

8. Device according to Claim 7, **characterized in that** ultrasonic reflectors (16) are disposed at specified distances from one another in a row in parallel next to the main measuring path between the first and the second end.

9. Device according to Claim 7 or 8, **characterized in that** a plurality of temperature sensors (17) is disposed between the first and the second end at specified distances from one another.

10. Device according to Claim 9, **characterized in that** a first guide tube (10) surrounds the main measuring path, a second guide tube (12) surrounds the reference paths and a third guide tube (11) surrounds the temperature sensors (17), wherein each guide tube has openings (15) via which the interior of the respective guide tube communicates with the surrounding liquid (90) during operation.

11. Device according to one of Claims 7 to 10, **characterized in that** the device for transmitting and receiving ultrasonic pulses is formed as an ultrasonic transducer.

12. Device according to Claim 11, **characterized in that** a respective separate ultrasonic transducer is disposed at the first end of each guide tube (10, 11, 12), wherein the ultrasonic transducers (21, 22) are disposed in the first and second guide tube (10, 12) for radiating in the direction of the second end, and the ultrasonic transducer (23) in the third guide tube (11) is disposed for radiating in the direction of the first end.

13. Device according to Claim 12, **characterized in that** the ultrasonic transducer (23) in the third guide tube (11) is disposed in an offset manner towards the second end with respect to the ultrasonic transducer (21) in the first guide tube (10).

14. Device according to Claim 12, **characterized in that** an additional ultrasonic transducer is disposed for radiating in the direction from the first to the second end at the second end in the guide tube (12) of the reference paths.

15. Device according to Claim 14, **characterized in that** at least one reflector (16) is situated in the guide tube (12) of the reference paths behind the ultrasonic transducer at the second end in the direction from the first to the second end.

16. Device according to one of Claims 12 to 15, **characterized in that** one of the guide tubes is formed as a hollow supporting arm that projects out of the container during operation and comprises a ball-and-socket joint for fixing and for vertical alignment of the device.

**Revendications**

1. Procédé pour déterminer le niveau (H) d'un liquide dans un récipient (2) à partir d'une mesure du temps de propagation d'impulsions ultrasonores et d'une vitesse ($\bar{v}$ (H) ) moyenne du son, **caractérisé en ce qu'**on mesure la vitesse du son de référence respective pour au moins deux parcours de référence se trouvant dans le liquide (90), **en ce qu'**on détermine par extrapolation à partir des au moins deux vitesses du son de référence la courbe ($\bar{v}$ (h)) de la vitesse ($\bar{v}$) moyenne du son en direction verticale en fonction de la hauteur (h), et **en ce qu'**on déduit à partir de cette courbe ($\bar{v}$(h)) la vitesse ($\bar{v}$(H)) moyenne du son, au-delà des points de mesure effectifs, la vitesse moyenne du son jusqu'au niveau (H) du liquide, à partir de quoi l'on détermine le niveau (H) du liquide au moyen d'un temps (tH) de propagation des impulsions ultrasonores réfléchies sur la surface (91) du liquide.

2. Procédé suivant la revendication 1, **caractérisé en ce que** la détermination du niveau (H) du liquide s'effectue de manière récursive, par le fait qu'on détermine pour une valeur estimée du niveau (H) du liquide, à partir de la courbe ($\bar{v}$ (h)) de la vitesse ($\bar{v}$) moyenne du son en fonction de la hauteur (h), une vitesse moyenne approchée du son à partir de laquelle on détermine, par multiplication par le temps (tH) de propagation, une valeur estimée améliorée pour le niveau (H) du liquide, et qu'on pose la valeur estimée améliorée comme valeur estimée du niveau (H) du liquide, pour laquelle on détermine à nouveau une valeur estimée améliorée.

3. Procédé suivant la revendication 1 ou 2, **caractérisé en ce que** l'extrapolation de la vitesse moyenne du son comprend une approximation linéaire.

4. Procédé suivant l'une des revendications 1 à 3, **caractérisé en ce que**, en présence d'impuretés qui s'accumulent avec le liquide (90) en un dépôt (80) en dessous d'une surface (81) limite, on détermine la hauteur (HS) du dépôt dans le récipient (2) par réflexion d'impulsions ultrasonores sur la surface (81) limite.

5. Procédé suivant l'une des revendications 1 à 4, **caractérisé en ce qu'**on détermine un volume de liquide à partir du niveau de liquide.

6. Procédé suivant la revendication 5, **caractérisé en ce que**, à l'aide d'une température (TM) moyenne, on norme le volume de liquide en fonction de la température, la température (TM) moyenne étant déterminée par intégration d'une courbe verticale de température mesurée dans le liquide.

7. Dispositif pour déterminer le niveau (H) d'un liquide dans un récipient (2) à partir d'une mesure du temps de propagation d'impulsions ultrasonores le long d'un parcours de mesure principal situé entre une première et une seconde extrémité, comportant au moins un dispositif pour émettre et recevoir des impulsions ultrasonores, au moins deux parcours de référence se trouvant en service dans le liquide (90), pour déterminer des vitesses du son de référence respectives, et une unité (50) de calcul, l'unité (50) de calcul déterminant par extrapolation à partir des au moins deux vitesses du son de référence la courbe ($\bar{v}$ (h) ) de la vitesse ($\bar{v}$) moyenne du son en direction verticale sur la hauteur (h), et déduisant à partir de cette courbe ($\bar{v}$ (h) ) la vitesse ($\bar{v}$ (H) ) moyenne du son, au-delà des points de mesure effectifs, jusqu'au niveau (H) du liquide, à partir de quoi elle détermine le niveau (H) du liquide au moyen d'un temps (tH) de propagation des impulsions ultrasonores réfléchies sur la surface (91) du liquide.

8. Dispositif suivant la revendication 7, **caractérisé en ce que** des réflecteurs (16) d'ultrasons sont disposés à intervalles prescrits en une rangée juxtaposée parallèlement au parcours de mesure principal entre la première et la seconde extrémité.

9. Dispositif suivant la revendication 7 ou 8, **caractérisé en ce que** plusieurs capteurs (17) de température sont disposés à intervalles prescrits entre la première et la seconde extrémité.

**10.** Dispositif suivant la revendication 9, **caractérisé en ce qu'**un premier tube (10) de guidage entoure le parcours de mesure principal, un deuxième tube (12) de guidage entoure les parcours de référence et un troisième tube (11) de guidage entoure les capteurs (17) de température, chaque tube de guidage comportant des ouvertures (15) par lesquelles, en service, l'intérieur du tube de guidage respectif communique avec le liquide (90) environnant.

**11.** Dispositif suivant l'une des revendications 7 à 10, **caractérisé en ce que** le dispositif pour émettre et recevoir des impulsions ultrasonores est conçu comme convertisseur ultrasonore.

**12.** Dispositif suivant la revendication 11, **caractérisé en ce qu'**un convertisseur ultrasonore séparé respectif est disposé à la première extrémité de chaque tube (10, 11, 12) de guidage, les convertisseurs (21, 22) ultrasonores dans le premier (10) et le deuxième (12) tube de guidage étant disposés pour émettre en direction de la seconde extrémité, et le convertisseur (23) ultrasonore dans le troisième tube (11) de guidage pour émettre en direction de la première extrémité.

**13.** Dispositif suivant la revendication 12, **caractérisé en ce que** le convertisseur (23) ultrasonore dans le troisième tube (11) de guidage est disposé décalé vers la seconde extrémité par rapport au convertisseur (21) ultrasonore dans le premier tube (10) de guidage.

**14.** Dispositif suivant la revendication 12, **caractérisé en ce qu'**un convertisseur ultrasonore supplémentaire est disposé à la seconde extrémité dans le tube (12) de guidage des parcours de référence pour émettre en direction de la première vers la seconde extrémité.

**15.** Dispositif suivant la revendication 14, **caractérisé en ce qu'**au moins un réflecteur (16) se trouve, en direction de la première vers la seconde extrémité, après le convertisseur ultrasonore à la seconde extrémité dans le tube (12) de guidage des parcours de référence.

**16.** Dispositif suivant l'une des revendications 12 à 15, **caractérisé en ce qu'**un des tubes de guidage est conçu comme bras porteur creux, qui dépasse en service hors du récipient et comporte une articulation sphérique pour la fixation et l'orientation verticale du dispositif.

FIG 1

FIG 2

FIG 3

FIG 4